(19) Europäisches Patentamt
European Patent Office
Office européen des brevets

(11) EP 0 768 034 B1

(12) EUROPÄISCHE PATENTSCHRIFT

(45) Veröffentlichungstag und Bekanntmachung des Hinweises auf die Patenterteilung:
**12.08.1998 Patentblatt 1998/33**

(51) Int. Cl.[6]: **A01N 43/54**
// (A01N43/54, 37:22, 39:02, 43:78, 47:36)

(21) Anmeldenummer: **96810663.3**

(22) Anmeldetag: **04.10.1996**

# (54) Herbizides synergistisches Mittel und Verfahren zur Unkrautbekämpfung

Synergistic herbicidal composition and method for weed control

Composition herbicide synergique et son utilisation pour luter contre les mauvaises herbes

(84) Benannte Vertragsstaaten:
**ES IT**

(30) Priorität: **13.10.1995 CH 2910/95**

(43) Veröffentlichungstag der Anmeldung:
**16.04.1997 Patentblatt 1997/16**

(73) Patentinhaber: **Novartis AG**
**4058 Basel (CH)**

(72) Erfinder:
- **Allard, Jean Louis**
  **4310 Rheinfelden (CH)**
- **Hudetz, Manfred**
  **Greensboro, NC 27407 (US)**

(56) Entgegenhaltungen:
**WO-A-91/05781**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 768 034 B1

## Beschreibung

Die vorliegende Erfindung betrifft ein neues herbizides synergistisches Mittel, welches eine herbizide Wirkstoffkombination enthält, die sich zur selektiven Unkrautbekämpfung in Nutzpflanzenkulturen, wie beispielsweise in Kulturen von Reis eignet.

Die Erfindung betrifft ferner ein Verfahren zur Bekämpfung von Unkräutern in Nutzpflanzenkulturen, sowie die Verwendung dieses neuen Mittels zu diesem Zweck.

Die Verbindung der Formel I

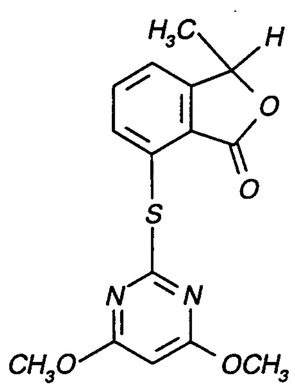

(I)

besitzt herbizide Wirkung, wie dies beispielsweise in WO 91/05781 beschrieben ist.

Die folgenden Verbindungen der Formeln II bis V sind ebenfalls als Herbizide bekannt und teilweise im Handel erhältlich:

a) Verbindungen der Formel II

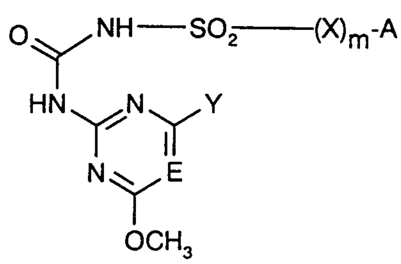

(II),

worin

A für die Gruppen

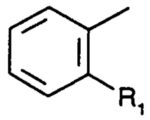 A1 , 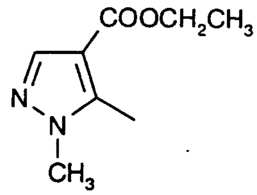 A2, 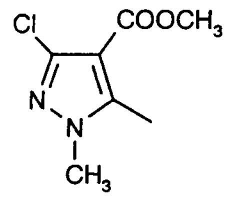 A5,

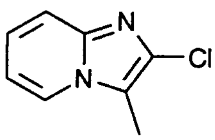 A3 oder 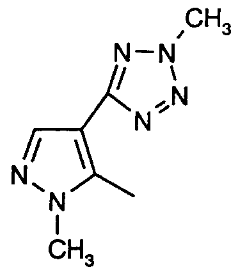 A4;

X für -O-, $-CH_2-$ oder -NH-;

Y für $CH_3$ oder $OCH_3$;

E für CH oder N;

$R_1$ für $COOCH_3$, $OC_2H_5$, $O(CH_2)_2OCH_3$, $O(CH_2)_2Cl$ oder

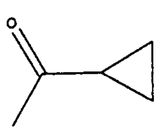 ;

und

m bei den Gruppen A1 und A4 für die Zahl 0 oder 1 und bei den Gruppen A2, A5 und A3 für die Zahl 0 steht, sind beispielsweise aus The Pesticide Manual, tenth edition, The British Crop Protection Council, Cambridge, Seiten 85, 211, 701, 873 und 1005 sowie aus EP-A-0 342 569, US-A-5 009 699 und US-A-4 746 353 bekannt.

b) Verbindungen der Formel III

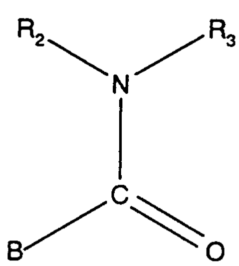 (III),

worin

B für $-CH_2Cl$, $-C_2H_5$, $-S-CH_2CH_3$,

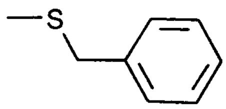 oder 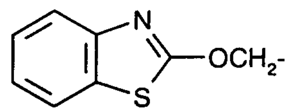 ;

$R_2$ für Wasserstoff, $CH_3$, $C_2H_5$ oder $-(CH_2)_2OCH_2CH_2CH_3$;

$R_3$ für $-CH(CH_3)-CH(CH_3)_2$,

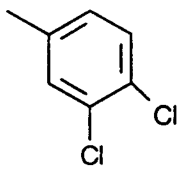 , 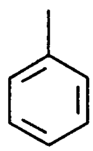 oder 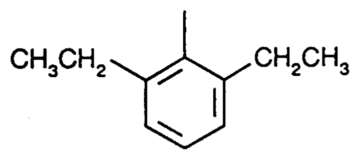

steht; oder

$R_2$ und $R_3$ zusammen für $-(CH_2)_6-$ stehen, sind beispielsweise aus The Pesticide Manual, tenth edition, The British Crop Protection Council, Cambridge, Seiten 399, 649, 706, 828 und 845 bekannt.

c) Verbindungen der Formel IV

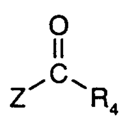 (IV) ,

worin

Z für

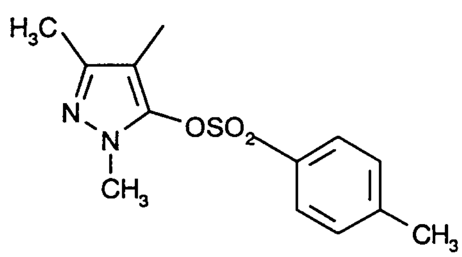 oder 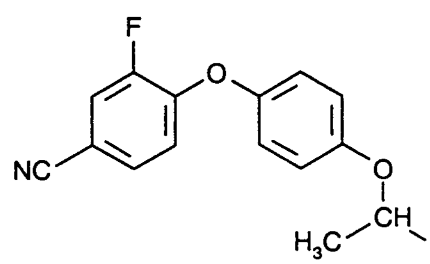

steht; und

$R_4$ $-O(CH_2)_3-CH_3$ oder

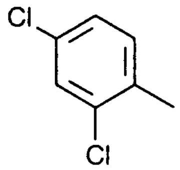

bedeutet,

sind beispielsweise aus The Pesticide Manual, tenth edition, The British Crop Protection Council, Cambridge, Seiten 870 und 1045 sowie aus US-A-4 894 085 bekannt.

d) Verbindungen der Formel V

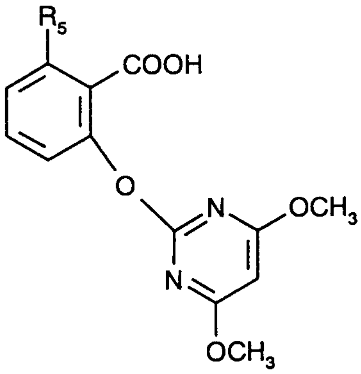

(V) ,

worin

$R_5$ für

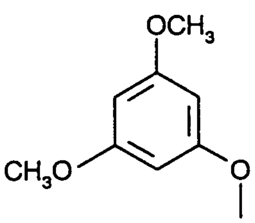

oder

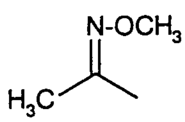

steht,

sind beispielsweise aus The Pesticide Manual, tenth edition, The British Crop Protection Council, Cambridge, Seiten 620 und 621 bekannt.

Es hat sich nun überraschenderweise gezeigt, daß eine mengenmäßig variable Kombination der Wirkstoffe, d.h. des Wirkstoffs der Formel I mit mindestens einem der Wirkstoffe der Formeln II bis V eine synergistische Wirkung entfaltet, die die Mehrzahl der vorzugsweise in Nutzpflanzenkulturen vorkommenden Unkräuter sowohl im Vorauflauf- als auch im Nachauflaufverfahren zu bekämpfen vermag, ohne die Nutzpflanze wesentlich zu schädigen.

Es wird daher gemäß der vorliegenden Erfindung ein neues synergistisches Mittel zur selektiven Unkrautbekämpfung vorgeschlagen, das neben üblichen inerten Formulierungshilfsstoffen als Wirkstoff die Verbindung der Formel I

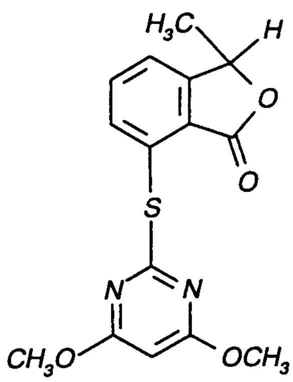

(I)

und eine synergistisch wirksame Menge mindestens eines Wirkstoffs ausgewählt aus den Verbindungen der Formel II

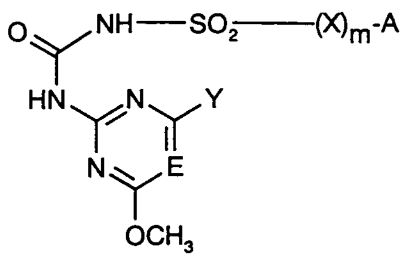

(II),

worin

A für die Gruppen

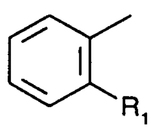 A1 , 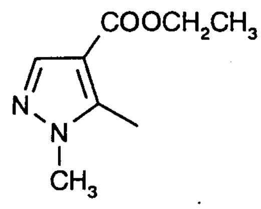 A2, 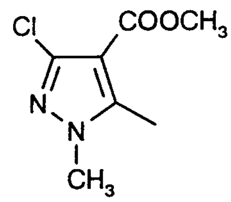 A5,

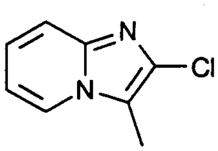 A3 oder 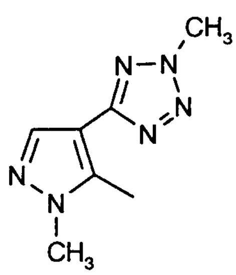 A4;

X für -O-, $-CH_2-$ oder -NH-;

Y für $CH_3$ oder $OCH_3$;

E für CH oder N;

$R_1$ für $COOCH_3$, $OC_2H_5$, $O(CH_2)_2OCH_3$, $O(CH_2)_2Cl$ oder

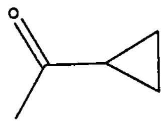 ;

und

m bei den Gruppen A1 und A4 für die Zahl 0 oder 1 und bei den Gruppen A2, A5 und A3 für die Zahl 0 steht; und

der Formel III

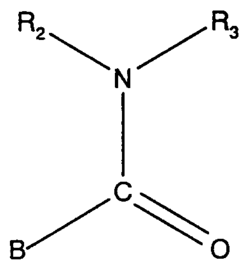 (III),

worin

B für $-CH_2Cl$, $-C_2H_5$, $-S-CH_2CH_3$,

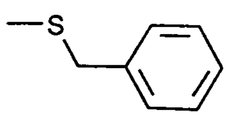 oder 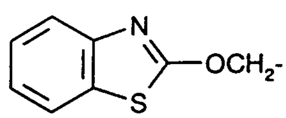 ;

$R_2$ für Wasserstoff, $CH_3$, $C_2H_5$ oder $-(CH_2)_2OCH_2CH_2CH_3$;

$R_3$ für $-CH(CH_3)-CH(CH_3)_2$,

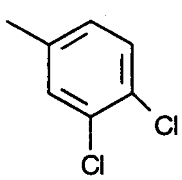 , 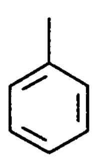 oder 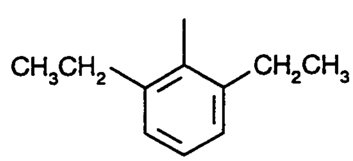

steht; oder

$R_2$ und $R_3$ zusammen für $-(CH_2)_6-$ stehen; und

der Formel IV

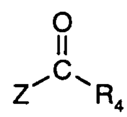 (IV),

worin

Z für

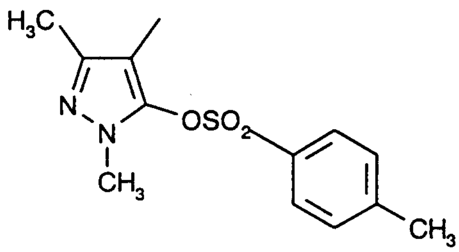 oder 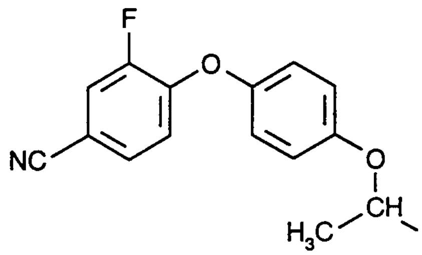

steht; und

$R_4$ $-O(CH_2)_3-CH_3$ oder

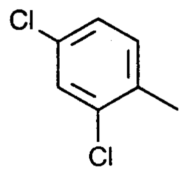

bedeutet; und

der Formel V

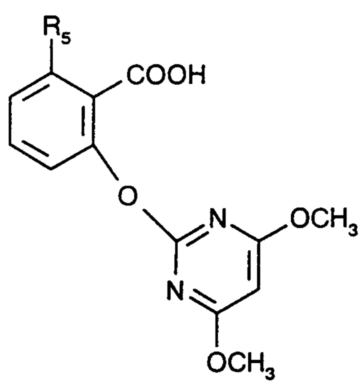 (V) ,

worin $R_5$ für

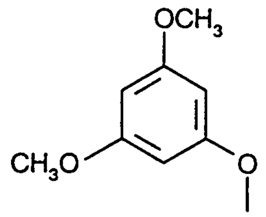

oder

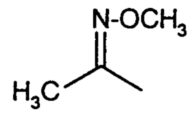

steht, in Mischung miteinander enthält.

Es ist in hohem Maße überraschend, daß die Kombination des Wirkstoffs der Formel I mit mindestens einem der Wirkstoffe der Formeln II bis V die prinzipiell zu erwartende additive Wirkung auf die zu bekämpfenden Unkräuter übersteigt und so die Wirkungsgrenzen der Einzelverbindungen insbesondere in zweierlei Hinsicht erweitert:

Zum einen werden die Aufwandmengen der Einzelverbindungen I und II bis V bei gleichbleibend guter Wirkung gesenkt. Zum anderen erzielt das erfindungsgemäße Mittel auch dort noch einen hohen Grad der Unkrautbekämpfung, wo die Einzelsubstanzen im Bereich geringer Aufwandmengen agronomisch nicht mehr brauchbar geworden sind. Dies hat eine wesentliche Verbreiterung des Unkrautspektrums und eine zusätzliche Erhöhung der Selektivität für die Nutzpflanzenkulturen zur Folge, wie es im Falle einer unbeabsichtigten Wirkstoffüberdosierung notwendig und erwünscht ist. Des weiteren erlaubt das erfindungsgemäße Mittel unter Beibehaltung der herausragenden Kontrolle der Unkräuter in Nutzpflanzen eine größere Flexibilität bei Nachfolgekulturen.

Das erfindungsgemäße Herbizidgemisch kann gegen eine große Anzahl agronomisch wichtiger Unkräuter, wie Stellaria, Nasturtium, Agrostis, Digitaria, Avena, Setaria, Sinapis, Lolium, Solanum, Phaseolus, Echinochloa, Scirpus, Monochoria, Sagittaria, Bromus, Alopecurus, Sorghum halepense, Rottboellia, Cyperus, Abutilon, Sida, Xanthium, Amaranthus, Chenopodium, Ipomoea, Chrysanthemum, Galium, Viola, Veronica und Heterantera verwendet werden.

Die erfindungsgemäßen Mittel sind für alle in der Landwirtschaft üblichen Applikationsmethoden wie z.B. preemergente Applikation, postemergente Applikation und Saatbeizung geeignet.

Das erfindungsgemäße Herbizidgemisch eignet sich vorzugsweise zur Unkrautbekämpfung in Nutzpflanzenkulturen wie Getreide, Raps, Zuckerrübe, Zuckerrohr, Plantagen, Mais, Soja, und insbesondere Reis.

Unter Kulturen sind auch solche zu verstehen, die durch konventionelle züchterische oder gentechnologische Methoden gegen Herbizide bzw. Herbizidklassen tolerant gemacht worden sind.

Die erfindungsgemäße Wirkstoffkombination enthält den Wirkstoff der Formel I und einen oder mehrere der Wirkstoffe der Formeln II bis V in beliebigem Mischungsverhältnis, in der Regel mit einem Überschuß der einen über die andere Komponente. Bevorzugte Mischungsverhältnisse zwischen dem Wirkstoff der Formel I und den Mischpartnern der Formeln II bis V liegen zwischen 1 : 100 und 100 : 1, insbesondere zwischen 1 : 10 und 10 : 1.

Bevorzugte erfindungsgemäße Mittel enthalten neben üblichen inerten Formulierungshilfsmitteln eine Verbindung der Formel I

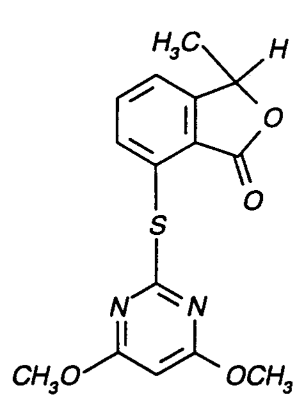

(I),

und eine synergistisch wirksame Menge entweder eines Wirkstoffs der Formel II

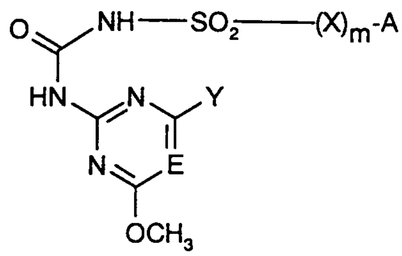

(II),

worin

A für die Gruppen

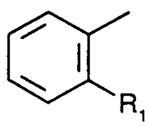

A1 ,

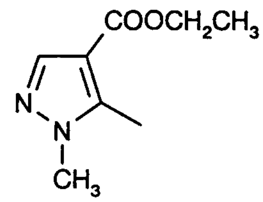

A2,

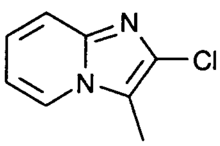

A3 oder

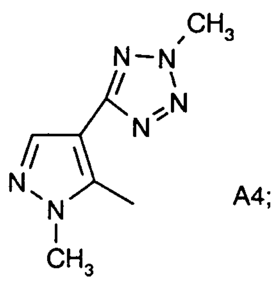

A4;

X für -O-, $-CH_2-$ oder -NH-;
Y für $CH_3$ oder $OCH_3$;
E für CH oder N;
$R_1$ für $COOCH_3$, $OC_2H_5$, $O(CH_2)_2OCH_3$, $O(CH_2)_2Cl$ oder

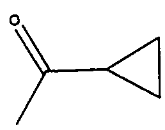

;

und
m bei den Gruppen A1 und A4 für die Zahl 0 oder 1 und bei den Gruppen A2 und A3 für die Zahl 0 steht; oder

der Formel III

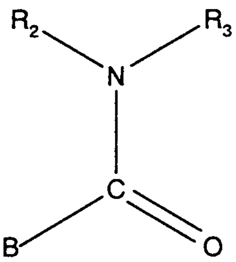 (III),

worin

B für $-CH_2Cl$, $-C_2H_5$, $-S-CH_2CH_3$,

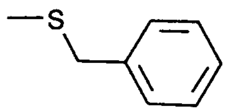 oder 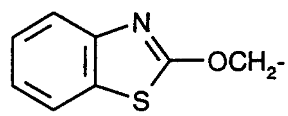 ;

$R_2$ für Wasserstoff, $CH_3$, $C_2H_5$ oder $-(CH_2)_2OCH_2CH_2CH_3$;

$R_3$ für $-CH(CH_3)-CH(CH_3)_2$,

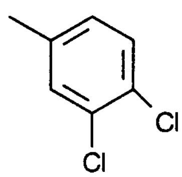 , 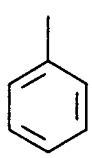 oder 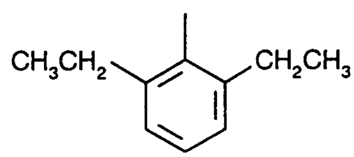

steht; oder

$R_2$ und $R_3$ zusammen für $-(CH_2)_6-$ stehen; oder

der Formel IV worin

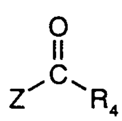 (IV),

Z für

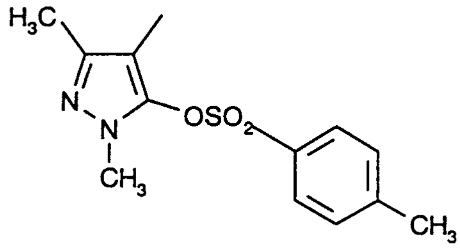

oder

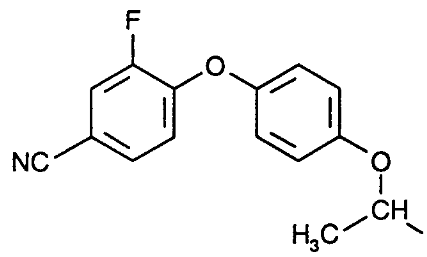

steht; und

$R_4$ $-O(CH_2)_3-CH_3$ oder

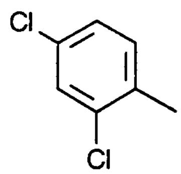

bedeutet; oder

der Formel V

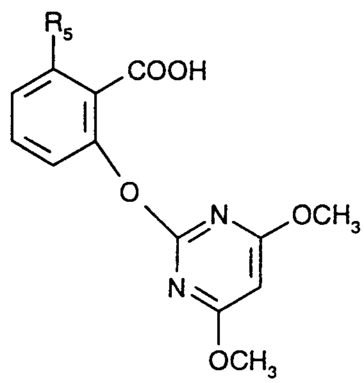

(V) ,

worin

$R_5$ für

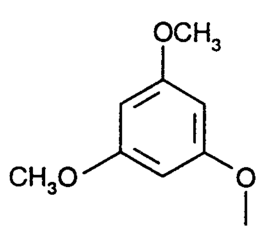

oder

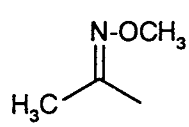

steht.

Bevorzugte erfindungsgemäße Mittel enthalten neben der Verbindung der Formel I eine Verbindung der Formel II, worin

A für die Gruppe

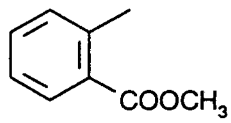

steht, wenn X $-CH_2-$ bedeutet und m für die Zahl 1 steht, oder A für die Gruppen

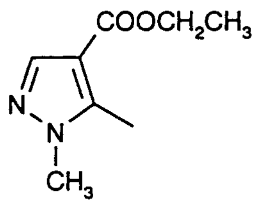

A2 oder

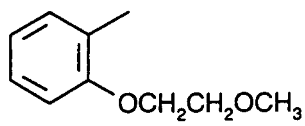

steht, wenn m die Zahl null bedeutet; und Y für $OCH_3$ steht.

Ferner sind synergistische Mittel bevorzugt, die neben der Verbindung der Formel I eine Verbindung der Formel III ausgewählt aus der Gruppe

2-(1,3-Benzothiazol-2-yloxy)-N-methylacetanilid,
3',4'-Dichlorpropionanilid,
2-Chlor-2',6'-diethyl-N-(2-propoxyethyl)acetanilid und
S-ethyl azepan-1-carbothioat enthalten.

Besonders bevorzugte Mittel enthalten neben der Verbindung der Formel I eine synergistisch wirksame Menge des Wirkstoffs Butyl (R)-2-[4-(4-cyano-2-fluorphenoxy)phenoxy]propionat oder des Wirkstoffs Methyl 2-[(4,6-dimethoxypyrimidin-2-yl)oxy]-6-[1-(methoxyimino)ethyl]benzoat oder die entsprechende Carbonsäure.

Ein ganz besonders bevorzugtes Mittel enthält neben der Verbindung der Formel I eine synergistisch wirksame Menge der Wirkstoffe 2-Chlor-2',6'-diethyl-N-(2-propoxyethyl)acetanilid (Pretilachlor) und 5-(4,6-Dimethoxypyrimidin-2-yl-carbamoylsulfamoyl)-1-methylpyrazol-4-ethylcarboxylat (NC-311).

Als ganz besonders wirksame synergistische Wirkstoffgemische haben sich Kombinationen der Verbindung der Formel I mit den Verbindungen der Tabellen 1 bis 4 erwiesen.

Tabelle 1: Bevorzugte Verbindungen der Formel II:

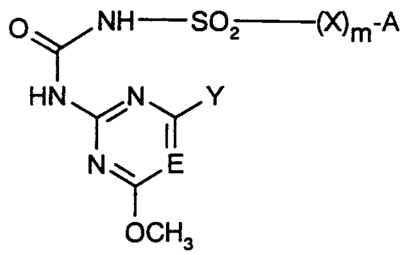

(II)

| Verb.Nr. | A | X | m | E | Y |
|---|---|---|---|---|---|
| 1.1 | 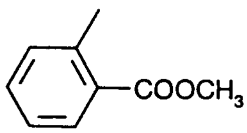 | $CH_2$ | 1 | CH | $OCH_3$ |
| 1.2 | 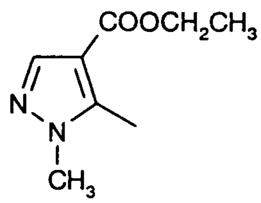 | - | 0 | CH | $OCH_3$ |
| 1.3 | 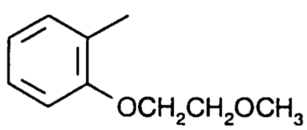 | - | 0 | N | $OCH_3$ |
| 1.4 | 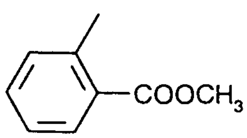 | - | 0 | N | $CH_3$ |

| Verb.Nr. | A | X | m | E | Y |
|---|---|---|---|---|---|
| 1.5 | 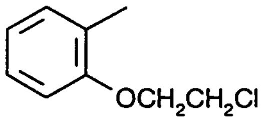 | - | 0 | N | $CH_3$ |
| 1.6 | 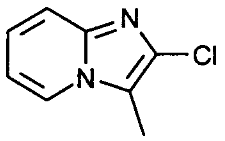 | - | 0 | CH | $OCH_3$ |
| 1.7 | 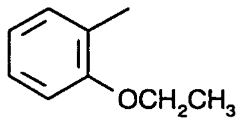 | O | 1 | CH | $OCH_3$ |
| 1.8 | 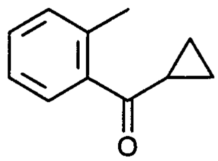 | NH | 1 | CH | $OCH_3$ |
| 1.9 | 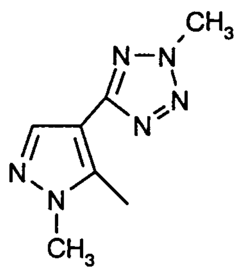 | - | 0 | CH | $OCH_3$ |
| 1.10 | 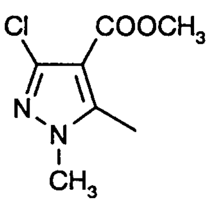 | - | 0 | CH | $OCH_3$ |

Tabelle 2: Bevorzugte Verbindungen der Formel III:

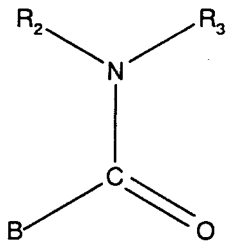

(III)

| Verb. Nr. | B | $R_2$ | $R_3$ |
|---|---|---|---|
| 2.1 | 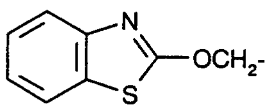 | $CH_3$ | 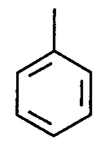 |
| 2.2 | $-C_2H_5$ | H | 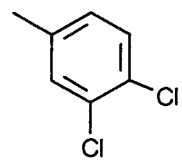 |
| 2.3 | $ClCH_2-$ | $-(CH_2)_2OCH_2CH_2CH_3$ | 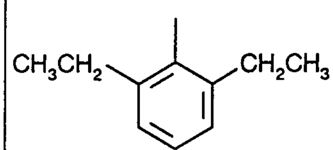 |
| 2.4 | $-S-CH_2CH_3$ | $-(CH_2)_6-$ | |
| 2.5 | 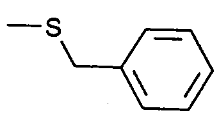 | $-C_2H_5$ | $-CH(CH_3)-CH(CH_3)_2$ |

Vorzugsweise werden die Verbindungen der Formel III, insbesondere die Verbindung Nr. 2.3 zusammen mit dem Safener der Formel VI

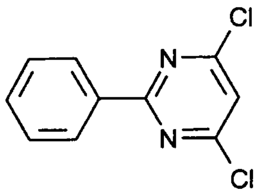

(VI)

(4,6-Dichlor-2-phenylpyrimidin, Fenclorim) eingesetzt. Der Safener der Formel VI besitzt selbst keine herbizide Wirksamkeit und kann die herbizide Wirkung der Verbindungen der Formel III nicht verstärken. Die Verbindung der Formel VI ist aus The Pesticide Manual, tenth edition, The British Crop Protection Council, Cambridge, Seite 432 bekannt.

## Tabelle 3: Bevorzugte Verbindungen der Formel IV:

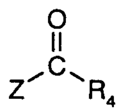

(IV)

| Verb. Nr. | Z | $R_4$ |
|---|---|---|
| 3.1 | 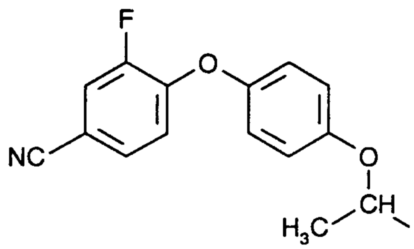 | $-O(CH_2)_3-CH_3$ |
| 3.2 | 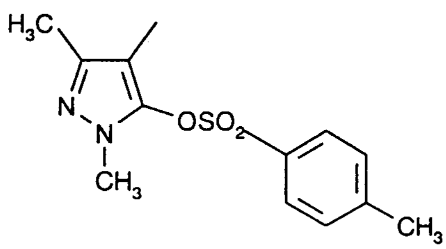 | 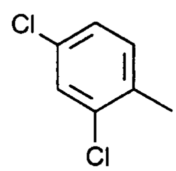 |

Tabelle 4: Bevorzugte Verbindungen der Formel V:

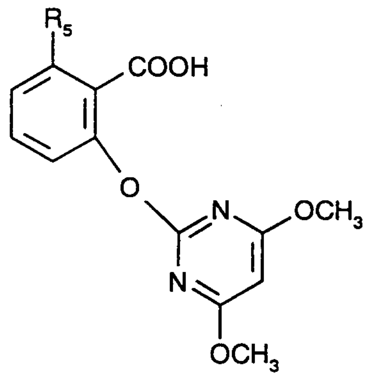

(V)

| Verb.Nr. | $R_5$ |
|---|---|
| 4.1 | 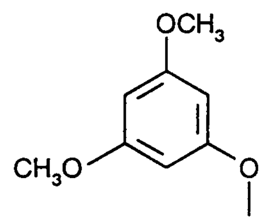 |
| 4.2 | 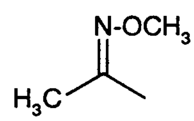 |

Die Aufwandmenge kann innerhalb weiter Bereiche variieren und hängt von der Beschaffenheit des Bodens, der Art der Anwendung (pre- oder postemergent; Saatbeizung; Anwendung in der Saatfurche; no tillage Anwendung etc.), der Kulturpflanze, dem zu bekämpfenden Unkraut, den jeweils vorherrschenden klimatischen Verhältnissen und anderen durch Anwendungsart, Anwendungszeitpunkt und Zielkultur bestimmten Faktoren ab. Im allgemeinen kann das erfindungsgemäße Wirkstoffgemisch mit einer Aufwandmenge von 0,005 bis 6 kg, insbesondere von 0,02 bis 2 kg Wirkstoffgemisch/ha angewendet werden.

In dem erfindungsgemäßen Mittel ist die Komponente der Formel I gegenüber den Komponenten der Formeln II bis V in einem Gewichtsverhältnis von 1 : 1000 bis 100 :1 vorhanden.

Die Gemische der Verbindung der Formel I mit den Verbindungen der Formeln II bis V können in unveränderter Form, d.h. wie sie in der Synthese anfallen, eingesetzt werden, vorzugsweise verarbeitet man sie aber auf übliche Weise mit den in der Formulierungstechnik gebräuchlichen Hilfsmitteln, wie Lösungsmittel, feste Träger oder Tenside, z.B. zu direkt versprühbaren oder verdünnbaren Lösungen, Spritzpulvern, löslichen Pulvern, Stäubemitteln, Granulaten oder Mikrokapseln. Die Anwendungsverfahren wie Versprühen, Vernebeln, Verstäuben, Benetzen, Verstreuen oder Gießen werden gleich wie die Art der Mittel den angestrebten Zielen und den gegebenen Verhältnissen entsprechend gewählt.

Die Formulierungen, d.h. die die Wirkstoffe der Formeln I und II bis V, sowie gegebenenfalls ein oder mehrere feste oder flüssige Formulierungshilfsmittel enthaltenden Mittel, Zubereitungen oder Zusammensetzungen werden in an sich bekannter Weise hergestellt, z.B. durch inniges Vermischen und/oder Vermahlen der Wirkstoffe mit den Formulierungshilfsmitteln wie z.B. Lösungsmittel oder festen Trägerstoffe. Ferner können zusätzlich oberflächenaktive Verbindungen

(Tenside) bei der Herstellung der Formulierungen verwendet werden.

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole, sowie deren Ether und Ester wie Ethanol, Ethylenglykol, Ethylenglykolmonomethyl- oder -ethylether, Ketone wie Cyclohexanon, stark polare Lösungsmittel wie N-Methyl-2-pyrrolidon, Dimethylsulfoxid oder N,N-Dimethylformamid, sowie gegebenenfalls epoxidierte Pflanzenöle wie epoxidiertes Kokosnußöl oder Sojaöl; oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften der Formulierung können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüber hinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach der Art des zu formulierenden Wirkstoffes der Formel I nichtionogene, kation- und/oder anionaktive Tenside und Tensidgemische mit guten Emulgier-, Dispergier- und Netzeigenschaften in Betracht.

Geeignete anionische Tenside können sowohl sog. wasserlösliche Seifen wie wasserlösliche synthetische oberflächenaktive Verbindungen sein.

Als Seifen seien die Alkali-, Erdalkali- oder gegebenenfalls substituierte Ammoniumsalze von höheren Fettsäuren ($C_{10}$-$C_{22}$), wie z.B. die Na- oder K-Salze der Öl- oder Stearinsäure, oder von natürlichen Fettsäuregemischen genannt, die z.B. aus Kokosnuß- oder Talgöl gewonnen werden können. Ferner sind auch die Fettsäure-methyl-taurinsalze zu erwähnen.

Häufiger werden jedoch sog. synthetische Tenside verwendet, insbesondere Fettalkoholsulfonate, Fettalkoholsulfate, sulfonierte Benzimidazolderivate oder Alkylarylsulfonate.

Die Fettalkoholsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschließt, z.B. das Na-oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Ethylenoxid-Addukten. Die sulfonierten Benzimidazolderivate enthalten vorzugsweise 2 Sulfonsäuregruppen und einen Fettsäurerest mit 8-22 C-Atomen. Alkylarylsulfonate sind z.B. die Na-, Ca- oder Triethanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Ethylenoxid-Adduktes oder Phospholipide in Frage.

Als nichtionische Tenside kommen in erster Linie Polyglykoletherderivate von aliphatischen oder cycloaliphatischen Alkoholen, gesättigten oder ungesättigten Fettsäuren und Alkylphenolen in Frage, die 3 bis 30 Glykolethergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Ethylenglykolethergruppen und 10 bis 100 Propylenglykolethergruppen enthaltenden Polyethylenoxidaddukte an Polypropylenglykol, Ethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Ethylenglykoleinheiten.

Als Beispiele nichtionischer Tenside seien Nonylphenolpolyethoxyethanole, Ricinusölpolyglykolether, Polypropylen-Polyethylenoxidaddukte, Tributylphenoxypolyethoxyethanol, Polyethylenglykol und Octylphenoxypolyethoxyethanol erwähnt.

Ferner kommen auch Fettsäureester von Polyoxyethylensorbitan wie das Polyoxyethylensorbitan-trioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Ethylsulfate vor, z.B. das Stearyltrimethylammoniumchlorid oder das Benzyldi-(2-chlorethyl)-ethylammoniumbromid.

Die in der Formulierungstechnik gebräuchlichen Tenside, die auch in den erfindungsgemäßen Mitteln verwendet werden können, sind u.a. in "Mc Cutcheon's Detergents and Emulsifiers Annual" MC Publishing Corp., Ridgewood New Jersey, 1981, Stache, H., "Tensid-Taschenbuch", Carl Hanser Verlag, München/Wien, 1981 und M. und J. Ash, "Encyclopedia of Surfactants", Vol I-III, Chemical Publishing Co., New York, 1980-81 beschrieben.

Die herbiziden Formulierungen enthalten in der Regel 0,1 bis 99 Gew%, insbesondere 0,1 bis 95 Gew.-% Wirkstoffgemisch aus der Verbindung der Formel I mit den Verbindungen der Formeln II bis V, 1 bis 99,9 Gew.% eines festen oder flüssigen Formulierungshilfsstoffes und 0 bis 25 Gew.%, insbesondere 0,1 bis 25 Gew.% eines Tensides.

Während als Handelsware üblicherweise konzentrierte Mittel bevorzugt werden, verwendet der Endverbraucher in der Regel verdünnte Mittel.

Die Mittel können auch weitere Zusätze wie Stabilisatoren z.B. gegebenenfalls epoxydierte Pflanzenöle (epoxydiertes Kokosnußöl, Rapsöl oder Sojaöl), Entschäumer, z.B. Silikonöl, Konservierungsmittel, Viskositätsregulatoren, Bindemittel, Haftmittel sowie Dünger oder andere Wirkstoffe enthalten.

Insbesondere setzen sich bevorzugte Formulierungen folgendermaßen zusammen: (% = Gewichtsprozent)

Stäube:

| | |
|---|---|
| Aktives Wirkstoffgemisch: | 0,1 bis 10 %, vorzugsweise 0,1 bis 5 % |
| festes Trägermittel: | 99,9 bis 90 %, vorzugsweise 99,9 bis 99 % |

Suspensions-Konzentrate:

| | |
|---|---|
| Aktives Wirkstoffgemisch: | 5 bis 75 %, vorzugsweise 10 bis 50 % |
| Wasser: | 94 bis 24 %, vorzugsweise 88 bis 30 % |
| oberflächenaktives Mittel: | 1 bis 40 %, vorzugsweise 2 bis 30 % |

Benetzbare Pulver:

| | |
|---|---|
| Aktives Wirkstoffgemisch: | 0,5 bis 90 %, vorzugsweise 1 bis 80 % |
| oberflächenaktives Mittel: | 0,5 bis 20 %, vorzugsweise 1 bis 15 % |
| festes Trägermaterial: | 5 bis 95 %, vorzugsweise 15 bis 90 % |

Granulate:

| | |
|---|---|
| Aktives Wirkstoffgemisch: | 0,1 bis 30 %, vorzugsweise 0,1 bis 15 % |
| festes Trägermittel: | 99,5 bis 70 %, vorzugsweise 97 bis 85 % |

Die folgenden Beispiele erläutern die Erfindung weiter, ohne sie zu beschränken.

Formulierungsbeispiele für Mischungen aus Verbindungen der Formeln I und II bis V (% = Gewichtsprozent)

| F1. Lösungen | a) | b) | c) | d) |
|---|---|---|---|---|
| Wirkstoffgemisch | 5 % | 10 % | 50 % | 90 % |
| 1-Methoxy-3-(3-methoxypropoxy)-propan | - | 20 % | 20 % | - |
| Polyethylenglykol MG 400 | 20 % | 10 % | - | - |
| N-Methyl-2-pyrrolidon | - | - | 30 % | 10 % |
| Arom. Kohlenwasserstoffgemisch $C_9$-$C_{12}$ | 75 % | 60 % | - | - |

Die Lösungen sind zur Anwendung in Form kleinster Tropfen geeignet.

| F2. Spritzpulver | a) | b) | c) | d) |
|---|---|---|---|---|
| Wirkstoffgemisch | 5 % | 25 % | 50 % | 80 % |
| Na-Ligninsulfonat | 4 % | - | 3 % | - |
| Na-Laurylsulfat | 2 % | 3 % | - | 4 % |

(fortgesetzt)

| F2. Spritzpulver | a) | b) | c) | d) |
|---|---|---|---|---|
| Na-Diisobutyl-naphthalinsulfonat | - | 6 % | 5 % | 6 % |
| Octylphenol-polyglykolether (7-8 Mol EO) | - | 1 % | 2 % | - |
| Hochdisperse Kieselsäure | 1 % | 3 % | 5 % | 10 % |
| Kaolin | 88 % | 62 % | 35 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| F3. Umhüllungs-Granulate | a) | b) | c) |
|---|---|---|---|
| Wirkstoffgemisch | 0.1 % | 5 % | 15 % |
| Hochdisperse Kieselsäure | 0.9 % | 2 % | 2 % |
| Anorg. Trägermaterial (∅ 0.1 - 1 mm) | 99.0 % | 93 % | 83 % |
| wie z.B. $CaCO_3$ oder $SiO_2$ | | | |

Der Wirkstoff wird in Methylenchlorid gelöst, auf den Träger aufgesprüht und das Lösungsmittel anschließend im Vakuum abgedampft.

| F4. Umhüllungs-Granulate | a) | b) | c) |
|---|---|---|---|
| Wirkstoffgemisch | 0.1 % | 5 % | 15 % |
| Polyethylenglykol MG 200 | 1.0 % | 2 % | 3 % |
| Hochdisperse Kieselsäure | 0.9 % | 1 % | 2 % |
| Anorg. Trägermaterial (∅ 0.1 - 1 mm) | 98.0 % | 92 % | 80 % |
| wie z.B. $CaCO_3$ oder $SiO_2$ | | | |

Der fein gemahlene Wirkstoff wird in einem Mischer auf das mit Polyethylenglykol angefeuchtete Trägermaterial gleichmäßig aufgetragen. Auf diese Weise erhält man staubfreie Umhüllungs-Granulate.

| F5. Extruder-Granulate | a) | b) | c) | d) |
|---|---|---|---|---|
| Wirkstoffgemisch | 0.1 % | 3 % | 5 % | 15 % |
| Na-Ligninsulfonat | 1.5 % | 2 % | 3 % | 4 % |
| Carboxymethylcellulose | 1.4 % | 2 % | 2 % | 2 % |
| Kaolin | 97.0 % | 93 % | 90 % | 79 % |

Der Wirkstoff wird mit den Zusatzstoffen vermischt, vermahlen und mit Wasser angefeuchtet. Dieses Gemisch wird extrudiert und anschließend im Luftstrom getrocknet.

| F6. Stäubemittel | a) | b) | c) |
|---|---|---|---|
| Wirkstoffgemisch | 0.1 % | 1 % | 5 % |
| Talkum | 39.9 % | 49 % | 35 % |
| Kaolin | 60.0 % | 50 % | 60 % |

Man erhält anwendungsfertige Stäubemittel, indem der Wirkstoff mit den Trägerstoffen vermischt und auf einer geeigneten Mühle vermahlen wird.

| F7. Suspensions-Konzentrate | a) | b) | c) | d) |
|---|---|---|---|---|
| Wirkstoffgemisch | 3 % | 10 % | 25 % | 50 % |
| Ethylenglykol | 5 % | 5 % | 5 % | 5 % |
| Nonylphenol-polyglykolether (15 Mol EO) | - | 1 % | 2 % | - |
| Na-Ligninsulfonat | 3 % | 3 % | 4 % | 5 % |
| Carboxymethylcellulose | 1 % | 1 % | 1 % | 1 % |
| 37%ige wäßrige Formaldehyd-Lösung | 0.2 % | 0.2 % | 0.2 % | 0.2 % |
| Silikonöl-Emulsion | 0.8 % | 0.8 % | 0.8 % | 0.8 % |
| Wasser | 87 % | 79 % | 62 % | 38 % |

Der feingemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Es ist oft praktischer, den Wirkstoff der Formel I und den bzw. die Mischungspartner der Formeln II bis V einzeln zu formulieren und sie dann kurz vor dem Ausbringen in Applikator im gewünschten Mischungsverhältnis als “Tankmischung” im Wasser zusammenzubringen.

Biologische Beispiele:

Ein synergistischer Effekt liegt immer dann vor, wenn die Wirkung der Wirkstoffkombination I und II, und/oder III, und/oder IV und/oder V größer ist als die Summe der Wirkung der einzeln applizierten Wirkstoffe.

Die zu erwartende herbizide Wirkung We für eine gegebene Kombination zweier Herbizide kann (vgl. COLBY, S.R., "Calculating synergistic and antagonstic response of herbicide combinations", Weeds 15, Seiten 20-22, 1967) wie folgt berechnet werden:

$$We = X + [Y \cdot (100 - X)/100]$$

Dabei bedeuten:

X = Prozent Herbizidwirkung bei Behandlung mit der Verbindung der Formel I mit p kg Aufwandmenge pro Hektar im Vergleich zur unbehandelten Kontrolle (= 0 %).

Y = Prozent Herbizidwirkung bei Behandlung mit einer Verbindung der Formeln II bis V mit q kg Aufwandmenge pro Hektar im Vergleich zur unbehandelten Kontrolle.

We = Erwartete herbizide Wirkung (Prozent Herbizidwirkung im Vergleich zur unbehandelten Kontrolle) nach Behandlung mit den Verbindungen der Formeln I und II bis V bei einer Aufwandmenge von p + q kg Wirkstoffmenge pro Hektar.

Ist die tatsächlich beobachtete Wirkung größer als der zu erwartende Wert We, so liegt Synergismus vor. Fom

Fachmann anerkannt sind synergistische Wirkungssteigerungen von Herbizidkombinationen von

0-50% Herbizidwirkung (Erwartungswert) auf 70-100% Herbizidwirkung (beobachtet), und
90-95% Herbizidwirkung (Erwartungswert) auf 95-100% Herbizidwirkung (beobachtet).

Der synergistische Effekt der Kombinationen des Wirkstoffs der Formel I mit mindestens einem der Wirkstoffe der Formeln II bis V wird in den folgenden Beispielen demonstriert.

Beispiel B1: Post-emergenter Versuch:

Die Versuchspflanzen werden unter Gewächshausbedingungen in Kunststofftöpfen bis zum 2-3 Blattstadium angezogen. Als Kultursubstrat wird eine Standarderde verwendet. Im 2-3 Blattstadium werden die Herbizide allein als auch in Mischung auf die Testpflanzen appliziert. Die Applikation erfolgt als wäßrige Suspension der Prüfsubstanzen (Formulierungsbeispiel F7, c)) in 500 l Wasser/ha. Die Aufwandmengen richten sich nach den unter Feldbedingungen und Gewächshausbedingungen ermittelten optimalen Dosierungen. Die Auswertung der Versuche erfolgt nach 21 Tagen (% Wirkung, 100 % = Pflanze abgestorben, 0 % = keine phytotoxische Wirkung).

Bei diesem Versuch zeigen die Kombinationen des Wirkstoffs der Formel I mit den Wirkstoffen der Formeln II bis V eine synergistische Wirkung.

Beispiel B2: Herbizide Wirkung in Wasserreis (verpflanzt):

Die Testpflanzen werden unter Gewächshausbedingungen in Kunststoffwannen in Standarderde gesät bzw. gepflanzt. Anschließend wird Wasser bis zur Erdoberfläche eingefüllt. Nach 3 Tagen wird der Wasserspiegel um 2 cm angehoben und die Prüfsubstanzen als wäßrige Suspension (Formulierungsbeispiel F7, c)) im Einlaufverfahren (Applikation ins Wasser) appliziert. Anschließend werden die Testpflanzen im Gewächshaus unter Optimalbedingungen weiterkultiviert. Die Auswertung erfolgt 25 Tage nach Applikation mit einer % Skala (100% = vollständige Schädigung, 0% = keine Wirkung). Boniturnoten von 70% bis 100% (insbesondere 80% bis 100%) bedeuten eine gute bis sehr gute Herbizidwirkung, Boniturnoten von 0% bis 30% (insbesondere 0% bis 20%) zeigen eine gute bis sehr gute Toleranz bei Kulturpflanzen.

Testpflanzen: Reis verpflanzt, Sagittaria pygmaea, Scirpus juncoides und Heterantera.

Auch in diesem Versuch zeigen die Kombinationen des Wirkstoffs der Formel I mit den Wirkstoffen der Formeln II bis V eine synergistische Wirkung.

Beispiele für die synergistische Wirksamkeit der Kombinationen des Wirkstoffs der Formel I mit den Wirkstoffen der Formeln II, III und IV sind in den Tabellen B1, B2 und B3 aufgeführt.

Tabelle B1: Versuche in Reis, verpflanzt, mit Sagittaria pygmaea im Einlaufverfahren

| Verb. Nr. | Aufwandmenge [g Wirkstoff/ha] | Nutzpflanze Reis verpfl. | Unkraut Sagittaria pygm. | We [Erwartungswert] |
|---|---|---|---|---|
| I | 60 | 0 | 0 | |
| 1.1 | 30 | 0 | 80 | |
| I + 1.1 | 60 + 30 | 0 | 94 | 80 |
| I | 120 | 0 | 0 | |
| 1.1 | 30 | 0 | 80 | |
| I + 1.1 | 120 + 30 | 0 | 90 | 80 |
| I | 240 | 0 | 0 | |
| 1.1 | 8 | 0 | 70 | |
| I + 1.1 | 240 + 8 | 0 | 90 | 70 |
| I | 240 | 0 | 0 | |
| 1.1 | 15 | 0 | 80 | |
| I + 1.1 | 240 + 15 | 0 | 90 | 80 |
| I | 240 | 0 | 0 | |
| 1.1 | 30 | 0 | 80 | |

| | | | | |
|---|---|---|---|---|
| I + 1.1 | 240 + 30 | 0 | 90 | 80 |
| I | 60 | 0 | 0 | |
| 1.3 | 12 | 0 | 75 | |
| I + 1.3 | 60 + 12 | 0 | 92 | 75 |
| I | 60 | 0 | 0 | |
| 1.3 | 24 | 15 | 94 | |
| I + 1.3 | 60 + 24 | 15 | 98 | 94 |
| I | 120 | 0 | 0 | |
| 1.3 | 12 | 0 | 75 | |
| I + 1.3 | 120 + 12 | 0 | 94 | 75 |
| I | 240 | 0 | 0 | |
| 1.3 | 6 | 0 | 70 | |
| I + 1.3 | 240 + 6 | 0 | 92 | 70 |
| I | 240 | 0 | 0 | |
| 1.3 | 12 | 0 | 75 | |
| I + 1.3 | 240 + 12 | 5 | 94 | 75 |
| I | 120 | 0 | 0 | |
| 2.1 | 1000 | 0 | 0 | |
| I + 2.1 | 120 + 1000 | 0 | 50 | 0 |

| | | | | |
|---|---|---|---|---|
| I | 240 | 0 | 0 | |
| 2.1 | 500 | 0 | 0 | |
| I + 2.1 | 240 + 500 | 5 | 70 | 0 |
| | | | | |
| I | 240 | 0 | 0 | |
| 2.1 | 1000 | 0 | 0 | |
| I + 2.1 | 240 + 1000 | 25 | 85 | 0 |
| | | | | |
| I | 120 | 0 | 0 | |
| 3.1 | 125 | 0 | 0 | |
| I + 3.1 | 120 + 125 | 0 | 50 | 0 |
| | | | | |
| I | 120 | 0 | 0 | |
| 3.1 | 250 | 0 | 0 | |
| I + 3.1 | 120 + 250 | 0 | 50 | 0 |
| | | | | |
| I | 240 | 0 | 0 | |
| 3.1 | 250 | 0 | 0 | |
| I + 3.1 | 240 + 250 | 0 | 60 | 0 |

| | | | | |
|---|---|---|---|---|
| I | 60 | 0 | 0 | |
| 1.2 | 30 | 0 | 0 | |
| I + 1.2 | 60 + 30 | 0 | 90 | 0 |
| | | | | |
| I | 120 | 0 | 0 | |
| 1.2 | 30 | 0 | 20 | |
| I + 1.2 | 120 + 30 | 0 | 92 | 20 |
| | | | | |
| I | 240 | 0 | 0 | |
| 1.2 | 30 | 0 | 20 | |
| I + 1.2 | 240 + 30 | 0 | 96 | 20 |
| I | 120 | 0 | 0 | |
| 2.2 | 1000 | 0 | 0 | |
| I + 2.2 | 120 + 1000 | 0 | 50 | 0 |
| | | | | |
| I | 240 | 0 | 0 | |
| 2.2 | 500 | 0 | 0 | |
| I + 2.2 | 240 + 500 | 0 | 80 | 0 |
| | | | | |
| I | 240 | 0 | 0 | |
| 2.2 | 1000 | 0 | 0 | |
| I + 2.2 | 240 + 1000 | 15 | 80 | 0 |

| | | | | |
|---|---|---|---|---|
| I | 60 | 0 | 0 | |
| 2.3 | 250 | 0 | 25 | |
| I + 2.3 | 60 + 250 | 0 | 60 | 25 |
| I | 240 | 0 | 0 | |
| 2.3 | 500 | 0 | 50 | |
| I + 2.3 | 240 + 500 | 0 | 70 | 50 |
| I | 60 | 0 | 0 | |
| 2.3 | 375 | 0 | 55 | |
| VI | 125 | 0 | 0 | |
| I + 2.3 + VI | 60 + 375 + 125 | 0 | 70 | 55 |
| I | 240 | 0 | 0 | |
| 2.3 | 375 | 0 | 55 | |
| VI | 125 | 0 | 0 | |
| I + 2.3 + VI | 240 + 375 + 125 | 10 | 90 | 55 |

Tabelle B2: Versuche in Reis, verpflanzt, mit Scirpus juncoides im Einlaufverfahren

| Verb. Nr. | Aufwandmenge [g Wirkstoff/ha] | Nutzpflanze Reis verpfl. | Unkraut Scirpus junc. | We [Erwartungswert] |
|---|---|---|---|---|
| I | 60 | 0 | 0 | |
| 2.1 | 125 | 0 | 0 | |
| I + 2.1 | 60 + 125 | 0 | 92 | 0 |
| I | 60 | 0 | 0 | |
| 2.1 | 250 | 0 | 65 | |
| I + 2.1 | 60 + 250 | 0 | 92 | 65 |
| I | 60 | 0 | 0 | |
| 2.1 | 500 | 0 | 94 | |
| I + 2.1 | 60 + 500 | 0 | 99 | 94 |
| I | 60 | 0 | 0 | |
| 3.1 | 125 | 0 | 0 | |
| I + 3.1 | 60 + 125 | 0 | 50 | 0 |
| I | 60 | 0 | 0 | |
| 3.1 | 250 | 0 | 0 | |
| I + 3.1 | 60 + 250 | 0 | 90 | 0 |

| | | | | |
|---|---|---|---|---|
| I | 120 | 0 | 50 | |
| 3.1 | 250 | 0 | 0 | |
| I + 3.1 | 120 + 250 | 0 | 94 | 50 |
| I | 60 | 0 | 0 | |
| 1.2 | 15 | 0 | 0 | |
| I + 1.2 | 60 + 15 | 0 | 90 | 0 |
| I | 60 | 0 | 0 | |
| 1.2 | 30 | 0 | 20 | |
| I + 1.2 | 60 + 30 | 0 | 96 | 20 |
| I | 120 | 0 | 50 | |
| 1.2 | 15 | 0 | 0 | |
| I + 1.2 | 120 + 15 | 0 | 96 | 50 |
| I | 120 | 0 | 50 | |
| 1.2 | 30 | 0 | 20 | |
| I + 1.2 | 120 + 30 | 0 | 97 | 60 |
| I | 60 | 0 | 0 | |
| 2.2 | 1000 | 0 | 35 | |
| I + 2.2 | 60 + 1000 | 0 | 92 | 35 |

| | | | | |
|---|---|---|---|---|
| I | 120 | 0 | 50 | |
| 2.2 | 500 | 0 | 0 | |
| I + 2.2 | 120 + 50 | 0 | 85 | 50 |
| I | 120 | 0 | 50 | |
| 2.2 | 1000 | 0 | 35 | |
| I + 2.2 | 120 + 1000 | 0 | 96 | 68 |
| I | 240 | 0 | 92 | |
| 2.2 | 500 | 0 | 0 | |
| I + 2.2 | 240 + 500 | 0 | 96 | 92 |

Tabelle B3: Versuche in Reis, verpflanzt, mit Heterantera im Einlaufverfahren

| Verb. Nr. | Aufwandmenge [g Wirkstoff/ha] | Nutzpflanze Reis verpfl. | Unkraut Heterantera | We [Erwartungswert] |
|---|---|---|---|---|
| I | 60 | 0 | 0 | |
| 1.1 | 30 | 0 | 75 | |
| I + 1.1 | 60 + 30 | 0 | 96 | 75 |
| I | 120 | 0 | 0 | |
| 1.1 | 30 | 0 | 75 | |
| I + 1.1 | 120 + 30 | 0 | 90 | 75 |
| I | 60 | 0 | 0 | |
| 2.1 | 500 | 0 | 40 | |
| I + 2.1 | 60 + 500 | 0 | 70 | 40 |
| I | 120 | 0 | 0 | |
| 2.1 | 500 | 0 | 40 | |
| I + 2.1 | 120 + 500 | 0 | 70 | 40 |
| I | 120 | 0 | 0 | |
| 2.1 | 1000 | 0 | 50 | |
| I + 2.1 | 120 + 1000 | 0 | 85 | 50 |

| | | | | |
|---|---|---|---|---|
| I | 60 | 0 | 0 | |
| 2.3 | 60 | 0 | 0 | |
| I + 2.3 | 60 + 60 | 0 | 55 | 0 |
| I | 60 | 0 | 0 | |
| 2.3 | 375 | 0 | 80 | |
| VI | 125 | 0 | 0 | |
| I + 2.3 + VI | 60 + 375 + 125 | 0 | 94 | 80 |
| I | 120 | 0 | 0 | |
| 2.3 | 375 | 0 | 80 | |
| VI | 125 | 0 | 0 | |
| I + 2.3 + VI | 120 + 375 + 125 | 0 | 94 | 80 |
| I | 120 | 0 | 0 | |
| 3.1 | 125 | 0 | 0 | |
| I + 3.1 | 120 + 125 | 0 | 50 | 0 |
| I | 120 | 0 | 0 | |
| 3.1 | 250 | 0 | 0 | |
| I + 3.1 | 120 + 250 | 0 | 60 | 0 |
| I | 120 | 0 | 0 | |
| 1.2 | 8 | 0 | 0 | |
| I + 1.2 | 120 + 8 | 0 | 55 | 0 |

| | | | | |
|---|---|---|---|---|
| I | 120 | 0 | 0 | |
| 1.2 | 15 | 0 | 0 | |
| I + 1.2 | 120 + 15 | 0 | 50 | 0 |
| I | 120 | 0 | 0 | |
| 1.2 | 30 | 0 | 0 | |
| I + 1.2 | 120 + 30 | 0 | 60 | 0 |
| I | 240 | 0 | 70 | |
| 2.2 | 1000 | 0 | 0 | |
| I + 2.2 | 240 + 1000 | 15 | 85 | 70 |

Beispiel B3: Herbizide Wirkung in trocken gesäten gefluteten Reis:

Die Testpflanzen werden unter Gewächshausbedingungen in Kunststoffwannen in Standarderde gesät und 2 bis 3 Wochen im Gewächshaus unter Optimalbedingungen weiterkultiviert. Anschließend werden die Prüfsubstanzen als wäßrige Suspension (Formulierungsbeispiel F7, c)) auf die Testpflanzen appliziert. Nach der Applikation werden die Wannen mit Wasser geflutet. Die Auswertung erfolgt 7 und 28 Tage nach Applikation mit einer % Skala (100% = vollständige Schädigung, 0% = keine Wirkung). Boniturnoten von 70% bis 100% (insbesondere 80% bis 100%) bedeuten eine gute bis sehr gute Herbizidwirkung, Boniturnoten von 0% bis 30% (insbesondere 0% bis 20%) zeigen eine gute bis sehr gute Toleranz bei Kulturpflanzen. Testpflanzen: Reis gesät, Echinochloa, Scirpus, Monochoria, Sagittaria, Cyperus s. und Eleocharis.

Auch in diesem Versuch zeigen die Kombinationen des Wirkstoffs der Formel I mit den Wirkstoffen der Formeln II bis V eine synergistische Wirkung.

**Patentansprüche**

1. Herbizides synergistisches Mittel, enthaltend neben üblichen inerten Formulierungshilfsmitteln eine Verbindung der Formel I

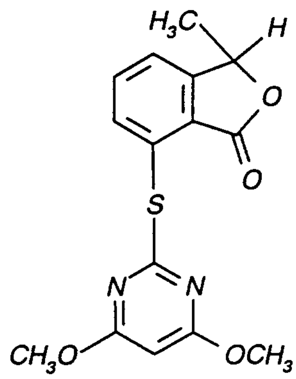

(I)

und eine synergistisch wirksame Menge mindestens eines Wirkstoffs ausgewählt aus den Verbindungen der Formel II

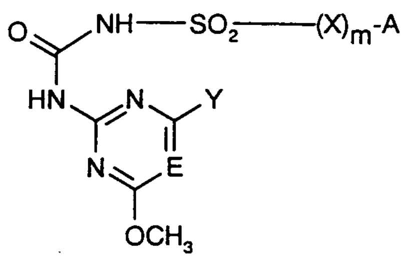

(II),

worin

A für die Gruppen

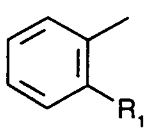 A1 , 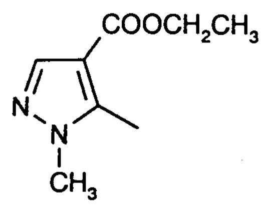 A2, 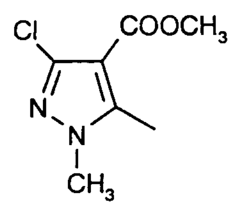 A5,

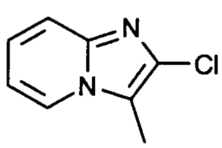 A3 oder 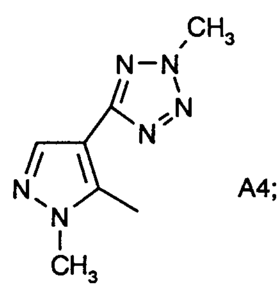 A4;

X für -O-, $-CH_2-$ oder -NH-;

Y für $CH_3$ oder $OCH_3$;

E für CH oder N;

$R_1$ für $COOCH_3$, $OC_2H_5$, $O(CH_2)_2OCH_3$, $O(CH_2)_2Cl$ oder

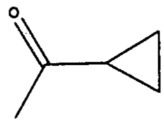 ;

und

m bei den Gruppen A1 und A4 für die Zahl 0 oder 1 und bei den Gruppen A2, A5 und A3 für die Zahl 0 steht; und

der Formel III

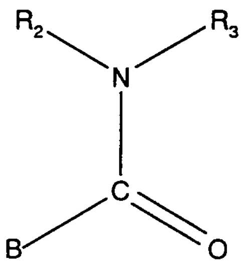 (III),

worin

B für $-CH_2Cl$, $-C_2H_5$, $-S-CH_2CH_3$,

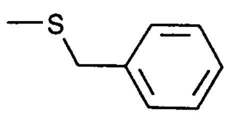 oder 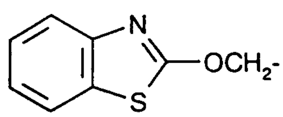 ;

$R_2$ für Wasserstoff, $CH_3$, $C_2H_5$ oder $-(CH_2)_2OCH_2CH_2CH_3$;

$R_3$ für $-CH(CH_3)-CH(CH_3)_2$,

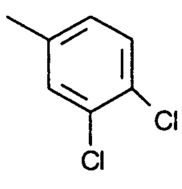 , 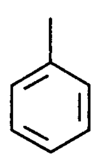 oder 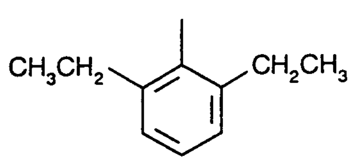

steht; oder

$R_2$ und $R_3$ zusammen für $-(CH_2)_6-$ stehen; und

der Formel IV

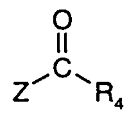

(IV),

worin

Z für

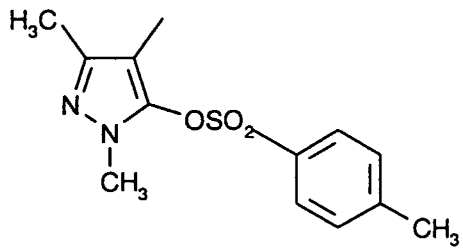

oder

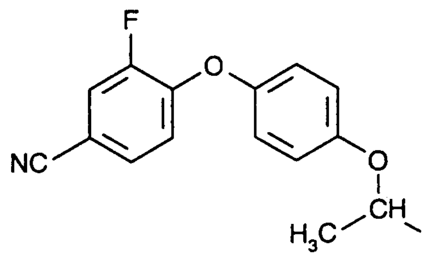

steht; und

$R_4$ $-O(CH_2)_3-CH_3$ oder

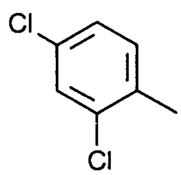

bedeutet; und

der Formel V

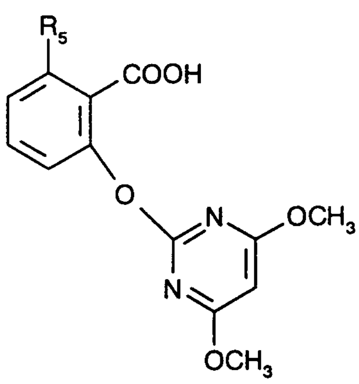

(V) ,

worin

$R_5$ für

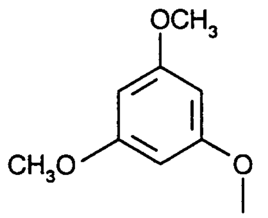

oder

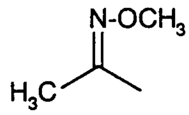

steht.

2. Herbizides synergistisches Mittel gemäß Anspruch 1, enthaltend neben üblichen inerten Formulierungshilfsmitteln eine Verbindung der Formel I

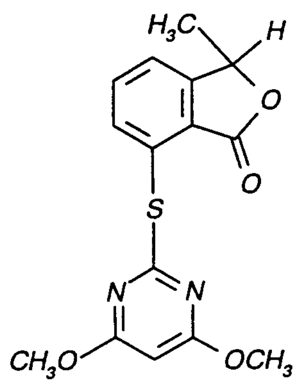

(I)

und eine synergistisch wirksame Menge entweder eines Wirkstoffs der Formel II

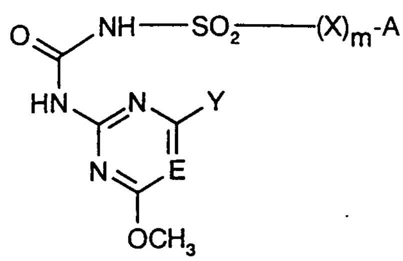

(II),

worin

A für die Gruppen

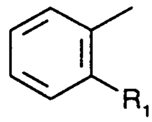 A1 , 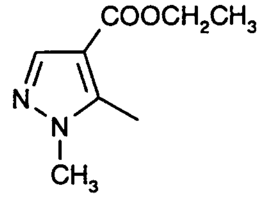 A2,

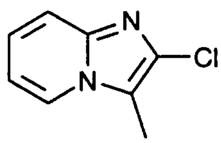 A3 oder 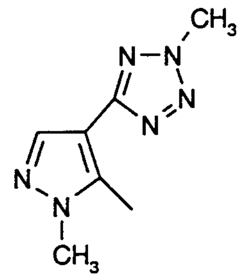 A4;

X für -O-, $-CH_2-$ oder -NH-;

Y für $CH_3$ oder $OCH_3$;

E für CH oder N;

$R_1$ für $COOCH_3$, $OC_2H_5$, $O(CH_2)_2OCH_3$, $O(CH_2)_2Cl$ oder

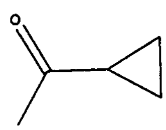 ;

und

m bei den Gruppen A1 und A4 für die Zahl 0 oder 1 und bei den Gruppen A2 und A3 für die Zahl 0 steht; oder

der Formel III

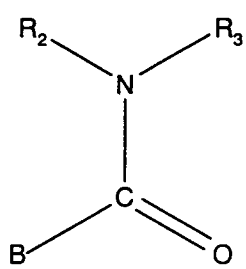 (III),

worin

B für $-CH_2Cl$, $-C_2H_5$, $-S-CH_2CH_3$,

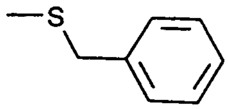 oder 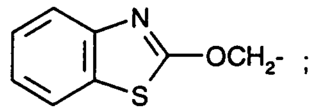

$R_2$ für Wasserstoff, $CH_3$, $C_2H_5$ oder $-(CH_2)_2OCH_2CH_2CH_3$;

$R_3$ für $-CH(CH_3)-COH(CH_3)_2$,

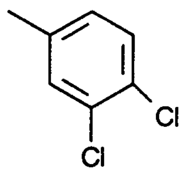 , 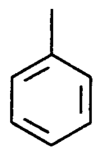 oder 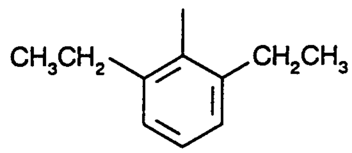

steht; oder

$R_2$ und $R_3$ zusammen für $-(CH_2)_6-$ stehen; oder

der Formel IV

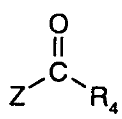 (IV),

worin

Z für

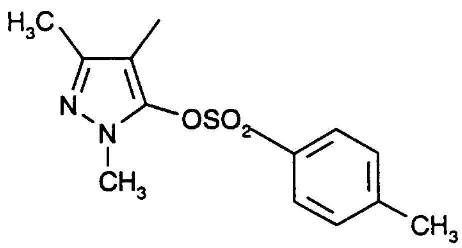 oder 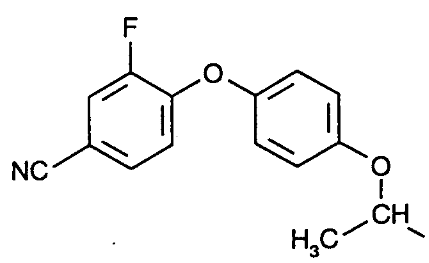

steht; und

$R_4$ $-O(CH_2)_3-CH_3$ oder

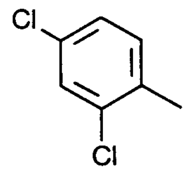

bedeutet; oder

der Formel V

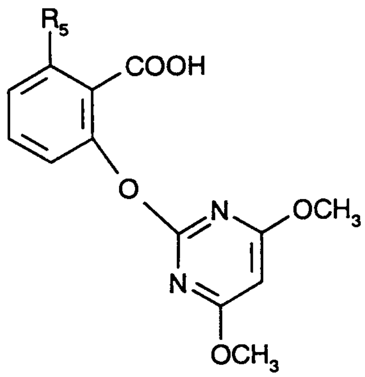

(V),

worin

$R_5$ für

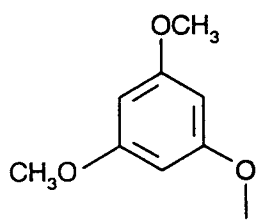

oder

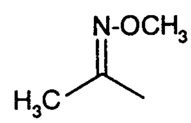

steht.

3. Herbizides Mittel gemäß Anspruch 2, enthaltend eine Verbindung der Formel I und eine synergistisch wirksame Menge eines Wirkstoffs der Formel II, worin

A für die Gruppe

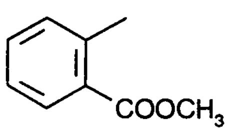

steht, wenn X $-CH_2-$ bedeutet und m für die Zahl 1 steht, oder A für die Gruppen

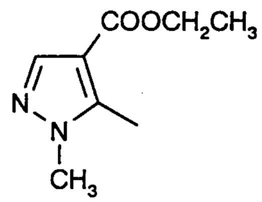 A2 oder 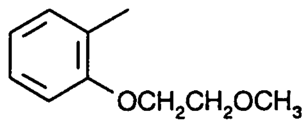

steht, wenn m die Zahl null bedeutet; und Y für $OCH_3$ steht.

4. Herbizides Mittel gemäß Anspruch 2, enthaltend eine Verbindung der Formel I und eine synergistisch wirksame Menge eines Wirkstoffs der Formel III ausgewählt aus der Gruppe

2-(1,3-Benzothiazol-2-yloxy)-N-methylacetanilid,
3',4'-Dichlorpropionanilid,
2-Chlor-2',6'-diethyl-N-(2-propoxyethyl)acetanilid und
S-ethyl azepan-1-carbothioat.

5. Herbizides Mittel gemäß Anspruch 2, enthaltend eine Verbindung der Formel I und eine synergistisch wirksame Menge des Wirkstoffs Butyl (R)-2-[4-(4-cyano-2-fluorphenoxy)phenoxy]propionat.

6. Herbizides Mittel gemäß Anspruch 2, enthaltend eine Verbindung der Formel I und eine synergistisch wirksame Menge des Wirkstoffs Methyl 2-[(4,6-dimethoxypyrimidin-2-yl)oxy]-6-[1-(methoxyimino)ethyl]benzoat oder die entsprechende Carbonsäure.

7. Herbizides Mittel gemäß Anspruch 1, enthaltend eine Verbindung der Formel I sowie eine synergistisch wirksame Menge der Wirkstoffe 2-Chlor-2',6'-diethyl-N-(2-propoxyethyl)acetanilid und 5-(4,6-Dimethoxypyrimidin-2-yl-carbamoylsulfamoyl)-1-methylpyrazol-4-ethylcarboxylat.

8. Herbizides Mittel gemäß Anspruch 2, dadurch gekennzeichnet, daß es zusätzlich zu der Verbindung der Formel I und der Verbindung der Formel III eine die herbizide Wirkung der Verbindung der Formel III gegen die Nutzpflanzen antagonisierende Menge des Wirkstoffs 4,6-Dichlor-2-phenylpyrimidin enthält.

9. Herbizides Mittel gemäß Anspruch 1, dadurch gekennzeichnet, daß die Komponente der Formel I gegenüber den Komponenten der Formeln II bis V in einem Gewichtsverhältnis von 1 : 1000 bis 100 : 1 vorhanden ist.

10. Verfahren zur Bekämpfung unerwünschten Pflanzenwuchses in Nutzpflanzenkulturen, dadurch gekennzeichnet, daß man eine herbizid wirksame Menge eines Mittels gemäß Anspruch 1 auf die Kulturpflanze oder deren Lebensraum einwirken läßt.

11. Verfahren gemäß Anspruch 10, dadurch gekennzeichnet, daß es sich bei der Kulturpflanze um Reis handelt.

12. Verfahren gemäß Anspruch 10, dadurch gekennzeichnet, daß man die Nutzpflanzenkulturen mit dem genannten Mittel in Aufwandmengen behandelt, die 0,005 bis 6 kg Wirkstoffgesamtmenge pro Hektar entsprechen.

## Claims

1. A herbicidal synergistic composition, comprising, besides customary inert formulation auxiliaries, a compound of formula I

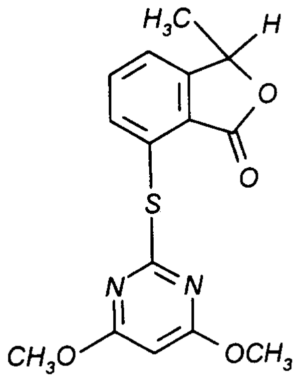

(I)

and a synergistically active amount of at least one active ingredient selected from among the compounds of formula II

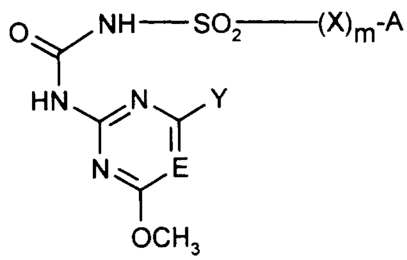

(II),

in which

A is a group

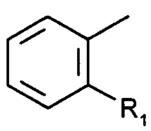

A1 ,

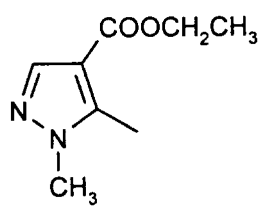

A2,

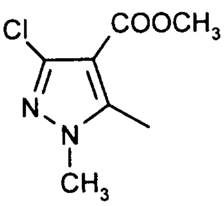

A5,

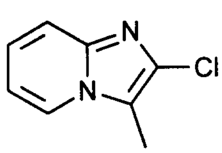

A3 or

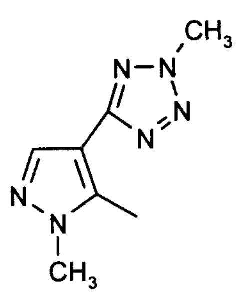

A4;

X is -O-, $-CH_2-$ or -NH-;

Y is $CH_3$ or $OCH_3$;

E is CH or N;

$R_1$ is $COOCH_3$, $OC_2H_5$, $O(CH_2)_2OCH_3$, $O(CH_2)_2Cl$ or

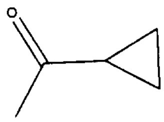 ;

and

m in the case of the groups A1 and A4 is the number 0 or 1 and in the case of the groups A2, A5 and A3 is the number 0; and

of formula III

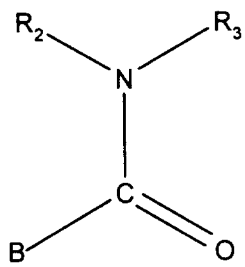 (III),

in which

B is $-CH_2Cl$, $-C_2H_5$, $-S-CH_2CH_3$,

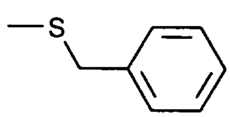 or 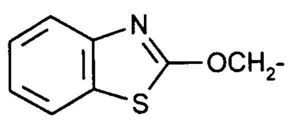 ;

$R_2$ is hydrogen, $CH_3$, $C_2H_5$ or $-(CH_2)_2OCH_2CH_2CH_3$;

$R_3$ is $-CH(CH_3)-CH(CH_3)_2$,

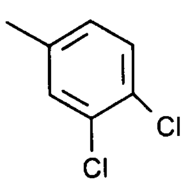 , 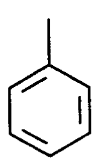 or 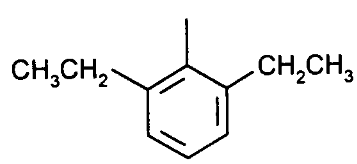 ;

or

$R_2$ and $R_3$ together are $-(CH_2)_6-$; and

of formula IV

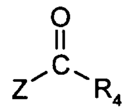 (IV),

in which

Z is

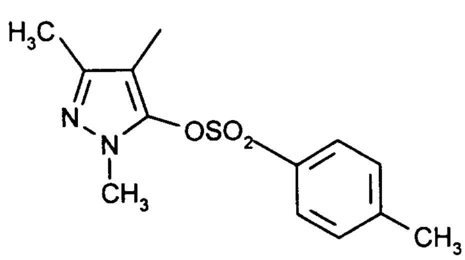 or 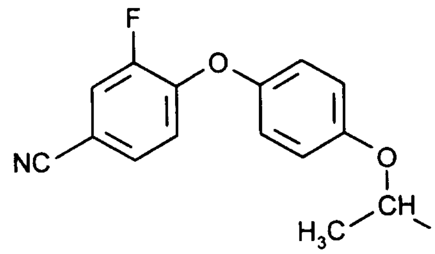 ;

and

$R_4$ is $-O(CH_2)_3-CH_3$ or

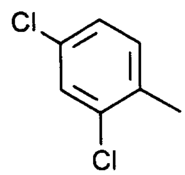 ;

and

of formula V

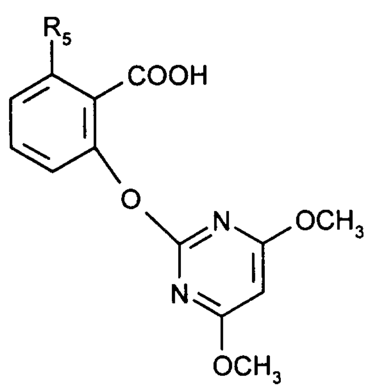 (V) ,

in which

$R_5$ is

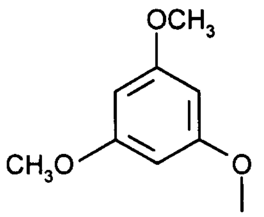

or

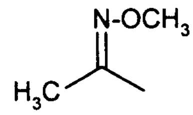

2. A herbicidal synergistic composition according to claim 1, comprising, besides customary inert formulation auxiliaries, a compound of formula I

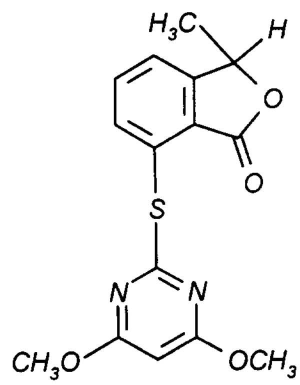

(I)

and a synergistically active amount either of an active ingredient of formula II

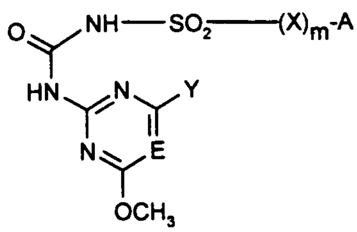

(II),

in which

A is a group

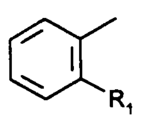 A1 , 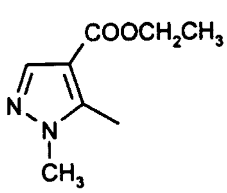 A2, 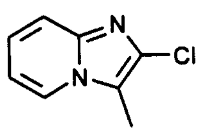 A3 or 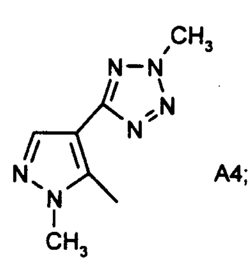 A4;

X is-O-, $-CH_2-$ or -NH-;

Y is $CH_3$ or $OCH_3$;

E is CH or N;

$R_1$ is $COOCH_3$, $OC_2H_5$, $O(CH_2)_2OCH_3$, $O(CH_2)_2Cl$ or

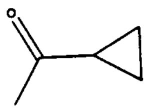 ;

and

m in the case of the groups A1 and A4 is the number 0 or 1 and in the case of the groups A2 and A3 is the number 0; or

of formula III

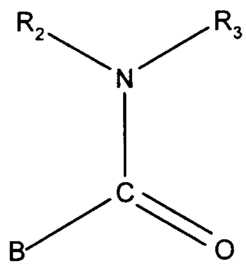 (III),

in which

B is $-CH_2Cl$, $-C_2H_5$, $-S-CH_2CH_3$,

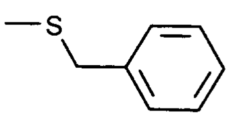 or 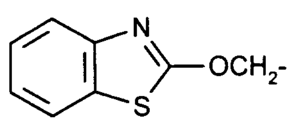 ;

$R_2$ is hydrogen, $CH_3$, $C_2H_5$ or $-(CH_2)_2OCH_2CH_2CH_3$;

$R_3$ is $-CH(CH_3)-COH(CH_3)_2$,

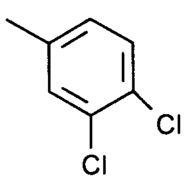 , 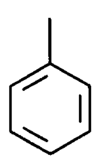 or 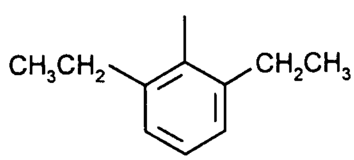 ;

or

$R_2$ and $R_3$ together are $-(CH_2)_6-$; or

of formula IV

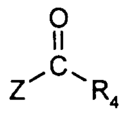

(IV),

in which

Z is

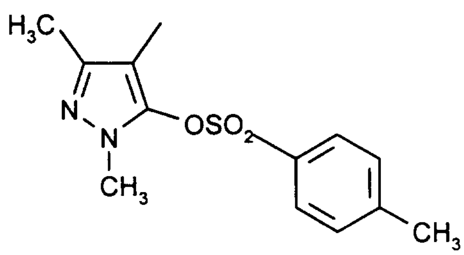

or

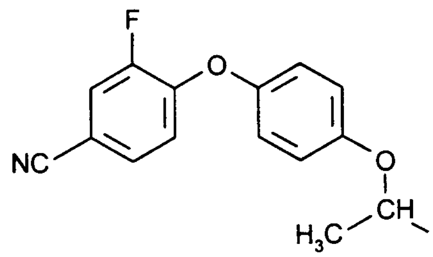

;

and
$R_4$ is $-O(CH_2)_3-CH_3$ or

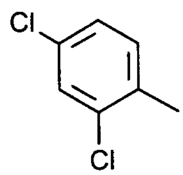

;

or

of formula V

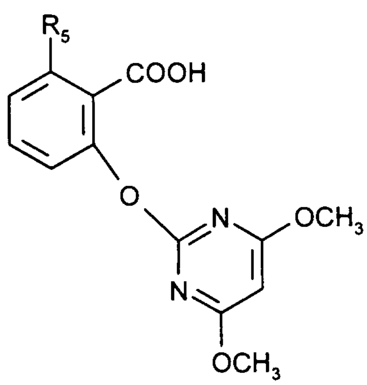

(V),

in which

$R_5$ is

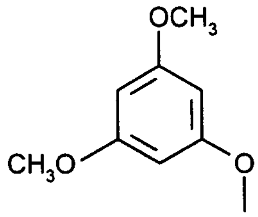

or

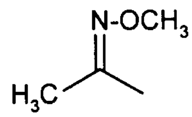

3. A herbicidal composition according to claim 2, comprising a compound of formula I and a synergistically active amount of an active ingredient of formula II in which

A is the group

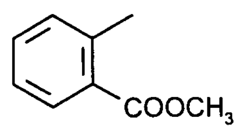

,

if X is $-CH_2-$ and m is the number 1, or A is a group

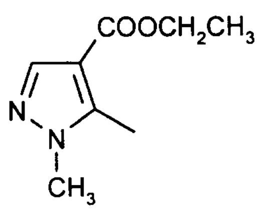

A2 or

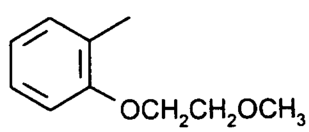

,

if m is the number zero; and Y is $OCH_3$.

4. A herbicidal composition according to claim 2, comprising a compound of formula I and a synergistically active amount of an active ingredient of formula III selected from the group consisting of

2-(1,3-benzothiazol-2-yloxy)-N-methylacetanilide,
3',4'-dichloropropionanilide,
2-chloro-2',6'-diethyl-N-(2-propoxyethyl)acetanilide and
S-ethyl azepan-1-carbothioate.

5. A herbicidal composition according to claim 2, comprising a compound of formula I and a synergistically active amount of the active ingredient butyl (R)-2-[4-(4-cyano-2-fluorophenoxy)phenoxy]propionate.

6. A herbicidal composition according to claim 2, comprising a compound of formula I and a synergistically active amount of the active ingredient methyl 2-[(4,6-dimethoxypyrimidin-2-yl)oxy]-6-[1-(methoxyimino)ethyl]benzoate or the corresponding carboxylic acid.

7. A herbicidal composition according to claim 1, comprising a compound of formula I and a synergistically active amount of the active ingredients 2-chloro-2',6'-diethyl-N-(2-propoxyethyl)acetanilide and ethyl 5-(4,6-dimethoxypyrimidin-2-yl-carbamoylsulfamoyl)-1-methylpyrazole-4-carboxylate.

8. A herbicidal composition according to claim 2, which, in addition to the compound of formula I and the compound of formula III, comprises an amount of the active ingredient 4,6-dichloro-2-phenylpyrimidine which antagonizes the

herbicidal activity of the compound of formula III towards the useful plants.

**9.** A herbicidal composition according to claim 1, which comprises the component of formula I relative to the components of formulae II to V in a weight ratio of 1 : 1000 to 100 : 1.

**10.** A method of controlling undesirable vegetation in crops of useful plants, which comprises allowing a herbicidally active amount of a composition according to claim 1 to act on the crop plant or its environment.

**11.** A method according to claim 10, wherein the crop plant is rice.

**12.** A method according to claim 10, wherein the crops of useful plants are treated with the composition mentioned at rates of application which correspond to a total amount of 0.005 to 6 kg of active ingredient per hectare.

**Revendications**

**1.** Agent herbicide synergique, contenant, outre les adjuvants de formulation inertes habituels, un composé de formule I

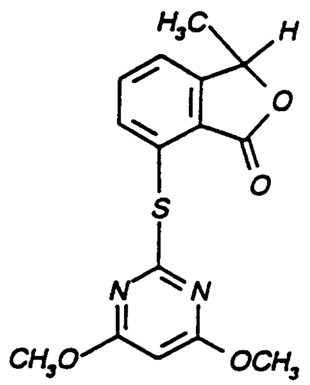

(I)

et une quantité efficace du point de vue synergique d'au moins une matière active choisie parmi les composés de formule II

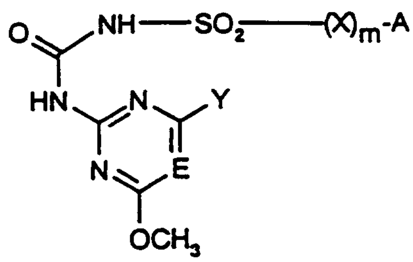

(II),

où

A signifie les groupes

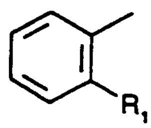 A1 , 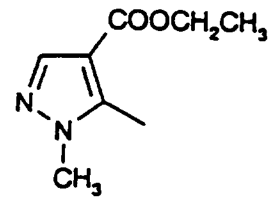 A2, 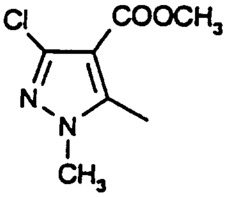 A5,

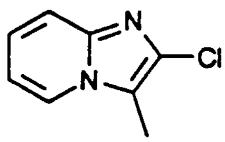 A3 ou 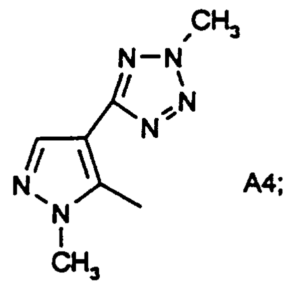 A4;

X signifie -O-, $-CH_2-$ ou -NH-;

Y signifie $CH_3$ ou $OCH_3$;

E signifie CH ou N;

$R_1$ signifie $COOCH_3$, $OC_2H_5$, $O(CH_2)_2OCH_3$, $O(CH_2)_2Cl$ ou

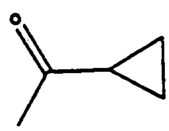 ;

et

m dans les groupes A1 et A4 signifie le nombre 0 ou 1 et dans les groupes A2, A5 et A3 signifie le nombre 0; et

de formule III

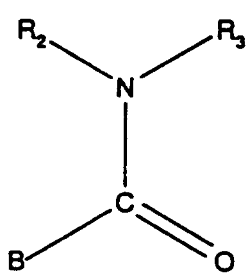 (III),

où

B signifie $-CH_2Cl$, $-C_2H_5$, $-S-CH_2CH_3$,

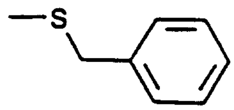 ou 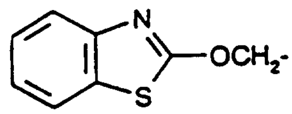 ;

$R_2$ signifie l'hydrogène, $CH_3$, $C_2H_5$ ou $-(CH_2)_2OCH_2CH_2CH_3$;
$R_3$ signifie $-CH(CH_3)-CH(CH_3)_2$,

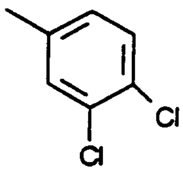 , 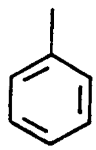 ou 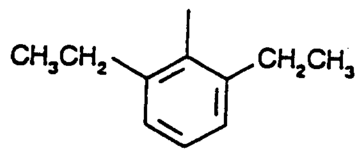

ou bien
$R_2$ et $R_3$ signifient ensemble $-(CH_2)_6-$; et

de formule IV

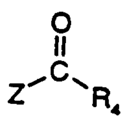 (IV),

où

Z signifie

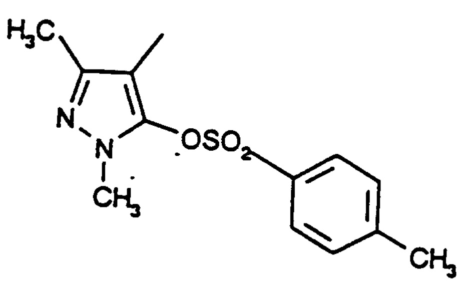 ou 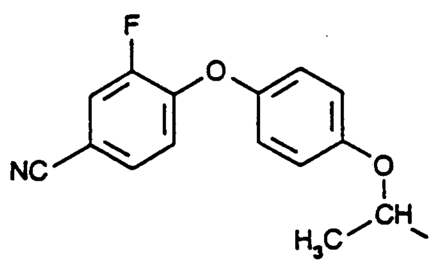

et

$R_4$ signifie $-O(CH_2)_3-CH_3$ ou

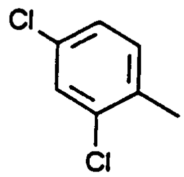 ;

et

de formule V

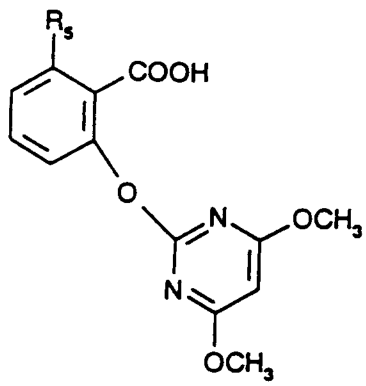 (V) ,

où

$R_5$ signifie

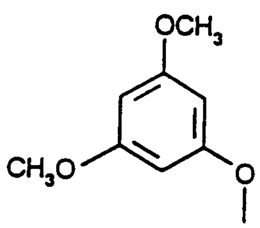 ou 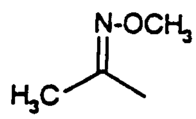 .

2. Un agent herbicide synergique selon la revendication 1, contenant, outre les adjuvants de formulation inertes habituels, un composé de formule I

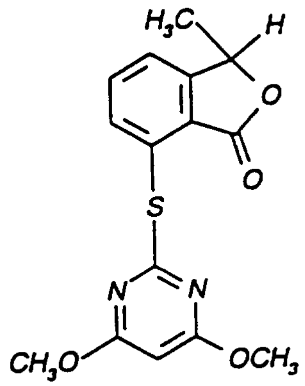

(I)

et une quantité efficace du point de vue synergique soit d'une matière active de formule II

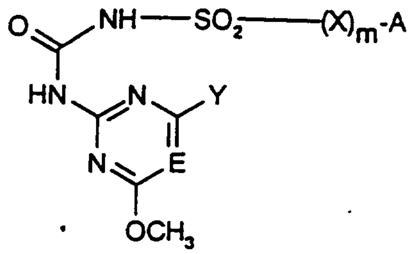

(II),

où

A signifie les groupes

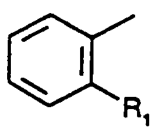

A1 ,

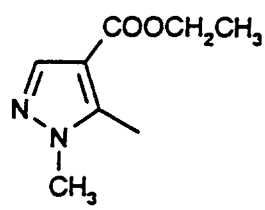

A2,

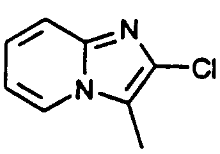

A3 ou

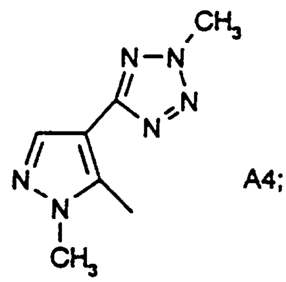

A4;

X signifie -O-, $-CH_2-$ ou -NH-;

Y signifie $CH_3$ ou $OCH_3$;

E signifie CH ou N;

$R_1$ signifie $COOCH_3$, $OC_2H_5$, $O(CH_2)_2OCH_3$, $O(CH_2)_2Cl$ ou et

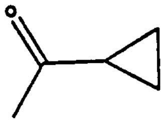 ;

m dans les groupes A1 et A4 signifie le nombre 0 ou 1 et dans les groupes A2 et A3, signifie le nombre 0; ou bien

de formule III

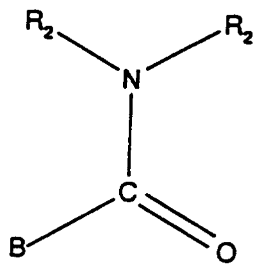 (III),

où

B signifie $-CH_2Cl$, $-C_2H_5$, $-S-CH_2CH_3$,

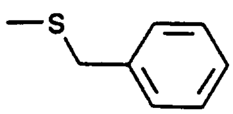 ou 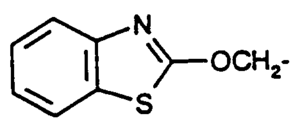 ;

$R_2$ signifie l'hydrogène, $CH_3$, $C_2H_5$ ou $-(CH_2)_2OCH_2CH_2CH_3$;

$R_3$ signifie $-CH(CH_3)-COH(CH_3)_2$,

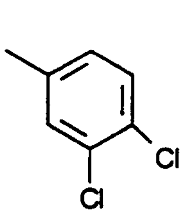 , 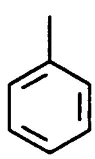 ou 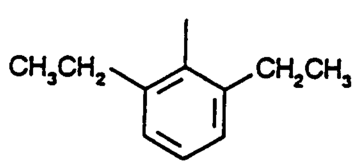

ou bien

$R_2$ et $R_3$ signifient ensemble $-(CH_2)_6-$; ou bien

de formule IV

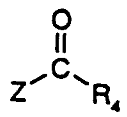

(IV),

où

Z signifie

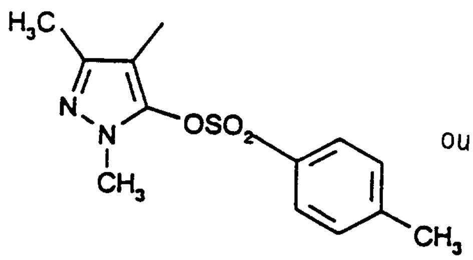

ou

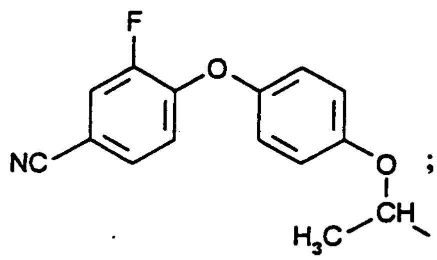

;

et

$R_4$ signifie $-O(CH_2)_3-CH_3$ ou

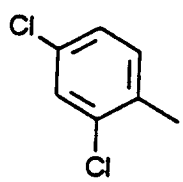

;

ou bien

de formule V

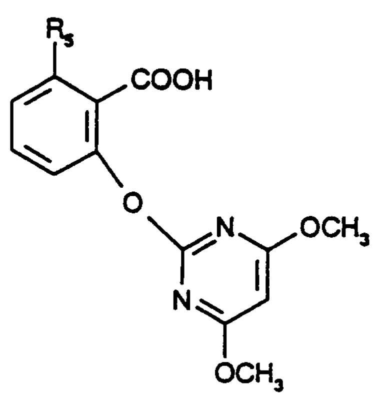

(V),

où

$R_5$ signifie

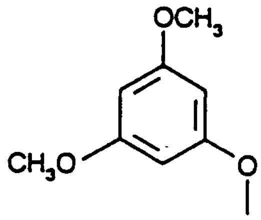

ou

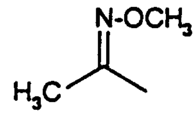

.

3. Un agent herbicide selon la revendication 2, contenant un composé de formule I et une quantité efficace du point de vue synergique d'une matière active de formule II, où

A signifie le groupe

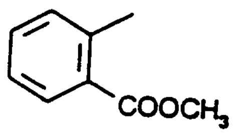

,

lorsque X signifie $-CH_2-$ et

m signifie le nombre 1, ou bien A signifie les groupes

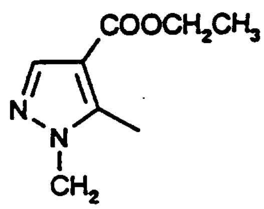

A2 ou

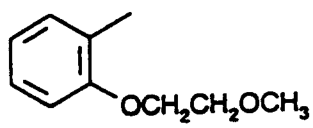

lorsque m signifie le nombre 0; et Y signifie $OCH_3$.

4. Un agent herbicide selon la revendication 2, contenant un composé de formule I et une quantité efficace du point de vue synergique d'une matière active de formule III choisie parmi

le 2-(1,3-benzothiazol-2-yloxy)-N-méthylacétanilide,
le 3',4'-dichloropropionanilide,
le 2-chloro-2',6'-diéthyl-N-(2-propoxyéthyl)acétanilide, et
le S-éthyl-azépane-1-carbothioate.

5. Un agent herbicide selon la revendication 2, contenant un composé de formule I et une quantité efficace du point de vue synergique de la matière active, le (R)-2-[4-(4-cyano-2-fluorophénoxy)phénoxy]propionate de butyle.

6. Un agent herbicide selon la revendication 2, contenant un composé de formule I et une quantité efficace du point de vue synergique de la matière active, le 2-[(4,6-diméthoxypyrimidine-2-yl)oxy]-6-[1-(méthoxyimino)éthyl]benzoate de méthyle ou l'acide carboxylique correspondant.

7. Un agent herbicide selon la revendication 1, contenant un composé de formule I ainsi qu'une quantité efficace du point de vue synergique de la matière active, le 2-chloro-2',6'-diéthyl-N-(2-propoxyéthyl)acétanilide et le 5-(4,6-diméthoxypyrimidine-2-yl-carbamoylsulfamoyl)-1-méthylpyrazole-4-carboxylate d'éthyle.

**8.** Un agent herbicide selon la revendication 2, caractérisé en ce que, outre le composé de formule I et le composé de formule III, il contient une quantité de la matière active 4,6-dichloro-2-phénylpyrimidine antagonisant l'action herbicide du composé de formule III contre les plantes utiles.

**9.** Un agent herbicide selon la revendication 1, caractérisé en ce que le rapport pondéral du composant de formule I au composant de formule II à V est compris entre 1 : 1000 et 100 : 1.

**10.** Un procédé de lutte contre la croissance indésirée de plantes dans des cultures de plantes utiles, caractérisé en ce que sur la plante cultivée ou sur son lieu de croissance, on laisse agir une quantité herbicide efficace d'un agent selon la revendication 1.

**11.** Un procédé selon la revendication 10, caractérisé en ce que la plante cultivée est le riz.

**12.** Un procédé selon la revendication 10, caractérisé en ce que on traite les cultures de plantes utiles avec l'agent indiqué en des quantités qui correspondent à une quantité totale de matière active par hectare de 0,005 à 6 kg.